# EUROPEAN PATENT SPECIFICATION

(11) **EP 0 312 772 B1**
(45) Date of publication and mention of the grant of the patent: **17.01.1996**
(21) Application number: 88115159.1
(22) Date of filing: 15.09.1988
(51) Int. Cl.: B41J 9/42, B41J 9/26, B41J 9/38

(54) **Impact printer**
Anschlagdrucker
Imprimante par impact

(30) Priority: 22.09.1987 JP 239469/87
(43) Date of publication of application: 26.04.1989
(73) Proprietor: CANON KABUSHIKI KAISHA, Tokyo (JP)
(72) Inventor: Saito, Tetsuya, Yokohama-shi Kanagawa-ken (JP)
(74) Representative: Tiedtke, Harro, Dipl.-Ing.

(56) References cited:
- GB-A- 2 195 481
- US-A- 4 333 398
- US-A- 4 538 930
- US-A- 4 547 087
- US-A- 4 569 607

## Description

### BACKGROUND OF THE INVENTION

### Field of the Invention

This invention relates to an impact type printer using, for example, a daisy wheel or the like to effect printing.

### Related Background Art

As one of the main currents of electronic typewriters and end printers, there is a so-called impact type printer which impacts a type member such as a daisy wheel or the like by a printing hammer to thereby accomplish printing. In such an impact printer, there has been the problem that when impact is effected by the printing hammer, the time for which a solenoid is energized is constant and therefore the output of the hammer is also constant and between the initial stage and the stage after use, the type portion of the type band is worn to deteriorate the quality of print. To solve such a problem, it is known to select time tables in order to obtain a stable output of the printing hammer even if the printer is used for a long period of time, as is known from Japanese Patent Application Laid-open No. 58-58278. That is, this is a system in which the operating speed of the hammer in the printing direction thereof is detected by a detecting coil and one of two or more sets of energization time tables of the hammer is selected in conformity with the result of the detection of the detecting coil to control the output of the hammer.

Also, the impact type printer system has the merit that a high quality of print is obtained, while it suffers from the demerit that the noise during printing is great. One of the causes of this noise is the impact sound produced when the printing hammer is returned to the standby position after printing and strikes against a stopper, and as a method of decreasing such sound, it is known from U.S. Patent No. 4,744,684, etc. to effect the second power supply to the solenoid before the printing hammer strikes against the stopper, thereby imparting a damping force to the hammer.

The applicant improved on such a prior-art system and proposed, in Japanese Patent Application No. 61-66008 (U.S. Application Serial No. 029,686), to detect the return speed of the hammer, and brake the recording hammer by a damping force conforming to result of the detection. Further, the applicant proposed, in Japanese Patent Application No. 61-216051 and Japanese Patent Application No. 61-224906 (U.S. Application Serial No. 094,894), to detect the return speed of the hammer and determine the timing for braking the recording hammer in conformity with the result of the detection.

In such system, the impact sound of the hammer is very effectively decreased if the printer is used within a certain temperature range.

However, when the environmental temperature becomes low and the platen becomes very hard, the repulsion force of the platen increases remarkably and the return speed of the hammer becomes very high, and this has led to the undesirable possibility that is too late to effect the second power supply to the solenoid before the hammer strikes against the stopper and thus, the hammer cannot be braked.

That is, when the environmental temperature becomes low, the return speed of the hammer becomes very high and the timing for braking the hammer becomes too late with a result that the impact sound of the hammer becomes vehiment. Also, if the second power supply is effected when the hammer strikes against the stopper and is bounded thereby, there has been the undesirable possibility that they are compounded to result in multiplex printing.

### SUMMARY OF THE INVENTION

It is an object of the present invention to overcome the above-noted disadvantages and to detect the return speed of the hammer to thereby infer the hardness of the platen and change over the printing pressure in conformity therewith.

According to the present invention this object is achieved by a recording apparatus for recording on a recording medium, said apparatus comprising:
a platen supporting said recording medium;
an image holding member;
hammer means for striking said image holding member to record on said recording medium, said hammer means being movable between an impacting position and a retracted position;
driving means for imparting a driving force to said hammer means to orient said hammer means in a direction from said retracted position to said impacting position, said driving means performing a first drive for recording and a second drive for recording;
speed detecting means for detecting the return speed of said hammer means when said hammer means returns from said impacting position to said retracted position by executing said first drive; and
controlling means for controlling said driving means, wherein said controlling means selects a drive force in conformity with the return speed detected by said speed detecting means to control said driving means to perform said second drive.

Other objects of the present invention will become apparent from the following detailed description of an embodiment thereof.

### BRIEF DESCRIPTION OF THE DRAWINGS

Figure 1A shows the construction of a printer according to an embodiment of the present invention.

Figure 1B is a rear view of the hammer mechanism portion shown in Figure 1A.

Figure 1C is an enlarged view of the slit plate and the sensor portion shown in Figure 1A.

Figure 2 is a graph showing the relation between the displacement of the hammer of Figure 1 and the sensor output voltage.

Figure 3 is a block diagram showing the control circuit of the printing hammer shown in Figure 1A.

Figure 4 is a flow chart showing the control operation of the printer shown in Figure 1A.

### DESCRIPTION OF THE PREFERRED EMBODIMENT

An embodiment of the present invention will hereinafter be described with reference to the drawings.

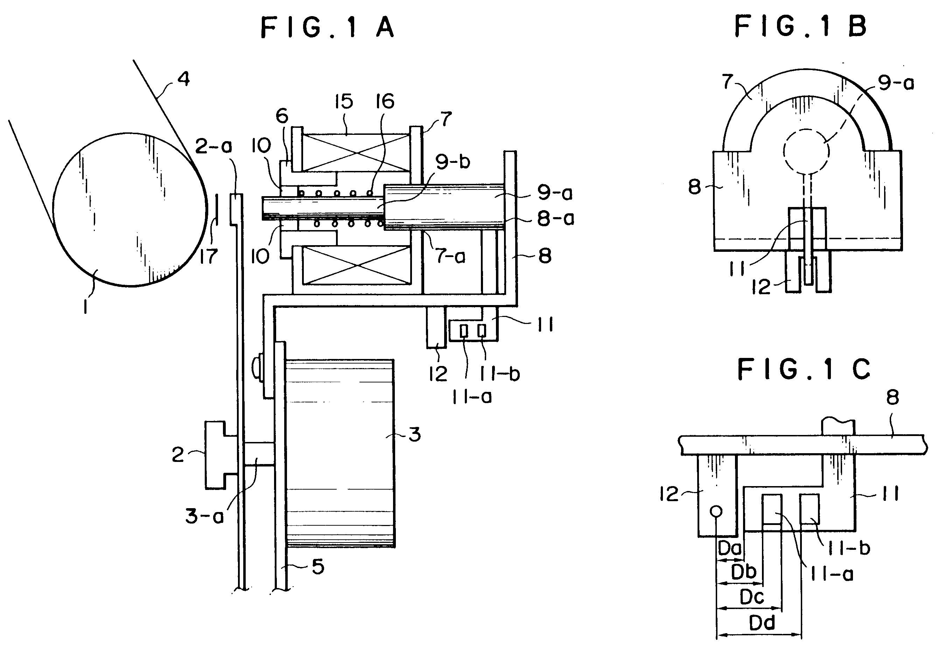

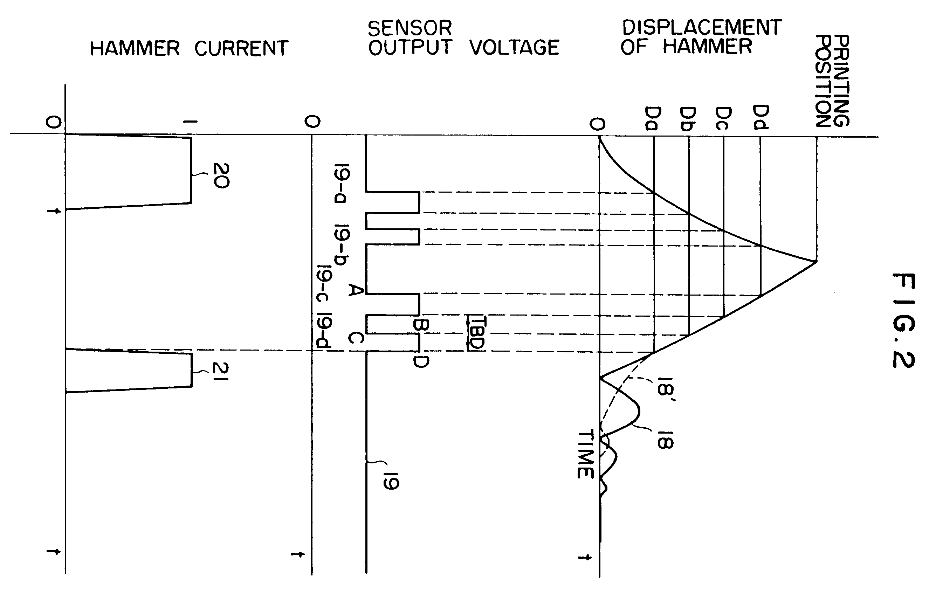

Referring to Figure 1A which shows the construction of a printer, the reference numeral 1 designates a platen and the reference numeral 2 denotes a type wheel. The type wheel 2 is mounted on the shaft 3-a of a motor 3 and is rotated by rotation of the motor 3, and a type 2-a to be printed is carried to between a printing hammer 9 which will be described later and the platen 1. The motor 3 is fixed to a carriage 5. A hammer base 8 is attached to the carriage 5, and a hammer mechanism portion is provided on the hammer base 8. This hammer mechanism portion comprises a yoke 6, a support frame 7, a printing hammer 9, a bearing 10, a coil unit 15, a compression coil spring 16, etc. The printing hammer 9 comprises an armature 9-a formed of a magnetic material and a fore end portion 9-b formed of a non-magnetic material. The printing hammer 9 is supported by the bearing 10 and the bearing portion 7-a of the support frame 7 of the coil unit 15, and is movable in the thrust direction and is normally biased to the stopper 8-a of the hammer base 8 by the reaction force of the compression coil spring 16. That is, it is normally in its standby position. When an electric power is supplied to the coil unit 15, the printing hammer 9 is protruded toward the platen 1 by a magnetic force produced between the yoke 6 and the armature 9-a, and impacts the type 2-a against a recording medium 4 on the platen 1 through an ink ribbon 17, whereby printing is accomplished, and after printing, the printing hammer 9 is pushed back by the repulsion force of the compression coil spring 16 and strikes against the stopper 8-a and is stopped thereby, thus returning to its standby position. A slit plate 11 as shown in Figures 1B and 1C is provided on the printing hammer 9 and is reciprocally moved with the printing hammer 9. The slit plate 11 is provided with slits 11-a and 11-b and therefore, when the printing hammer 9 effects one cycle of reciprocal movement, a sensor 12 outputs a signal 19 as shown in Figure 2.

Here, the curve 18 of Figure 2 graphically shows the position of the printing hammer 9 for time. That is, in the figure, the printing hammer 9 is quickly protruded with the first power supply and arrives at the printing position. When the first power supply is terminated, the printing hammer 9 is returned rearwardly by the repulsion force of the coil spring and strikes against the stopper 8-a and is vibrated several times.

The signals 19-a and 19-b of the aforementioned signal 19 of Figure 2 are output signals during the forward movement of the printing hammer 9 from the standby position to the printing position, and the signals 19-c and 19-d are output signals during the backward movement of the printing hammer from the printing position to the standby position. Here, the slit width and the slit spacing are constant and therefore, if the time interval between the signals, for example, the time interval T_{BD} between B and D, is read, the average speed of the printing hammer 9 is the meantime can be found. Also, if the mutual positional relations between the stopper 8-a and the sensor 12 and the slit 11-a are predetermined, the position of the printing hammer 9 relative to the stopper 8-a can also be detected. If in accordance with this information, the second power supply is effected when the printing hammer 9 has come to a suitable position during the backward movement thereof, a magnetic force produced thereby acts in the direction opposite to the direction of movement of the printing hammer 9 and therefore, the return speed of the printing hammer 9 is decreased.

In Figure 2, a first pulse 20 is for effecting printing, and a magnetic force is produced thereby and the printing hammer 9 is thereafter returned to the standby position by the repulsion force of the platen 1 and the force of the compression coil spring 16, and if at that time, the time interval T_{BD} of Figure 2 is detected and a proper current value and a proper excitation time are selected thereby and the second power supply is effected to the coil unit 15 at a point of time whereat the printing hammer 9 passes through D, the printing hammer 9 is decelerated by this magnetic force and slowly strikes against the stopper 8-a. This is shown by the curve 18′ of Figure 2. Thereby the impact sound between the printing hammer 9 and the stopper 8-a is greatly reduced and thus, the noise during printing can be reduced.

Further in the present embodiment, the return speed of the printing hammer 9 is detected, whereby the next protrusion speed of the printing hammer 9 is controlled. That is, generally, the platen is made of an elastic material such as rubber and when it is placed in a low temperature or when the hardening of the platen by a variation with time occurs, the repulsion coefficient thereof increases as compared with the usual case and therefore, even when printing is effected with the same printing energy, the return speed of the hammer shaft becomes high. So, the printing pressure may be changed over in conformity with the return speed detected by the sensor.

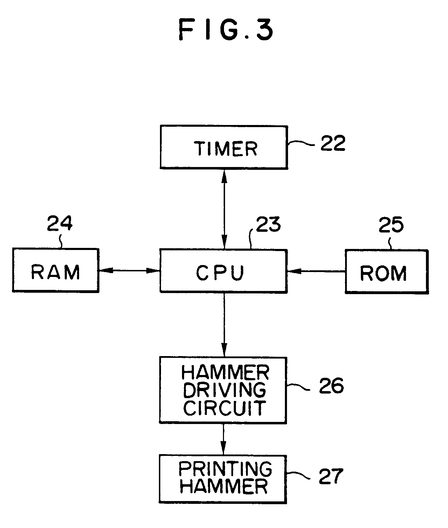

Figure 3 is a block diagram showing the printing hammer control circuit of the printer shown in Figure 1. In the figure, the reference numeral 23 designates a CPU for controlling the recording apparatus. The CPU 23 has connected thereto RAM 22 for storing recording data or the like therein and ROM 24 storing therein a printing table or the like as shown in Table 1 below.

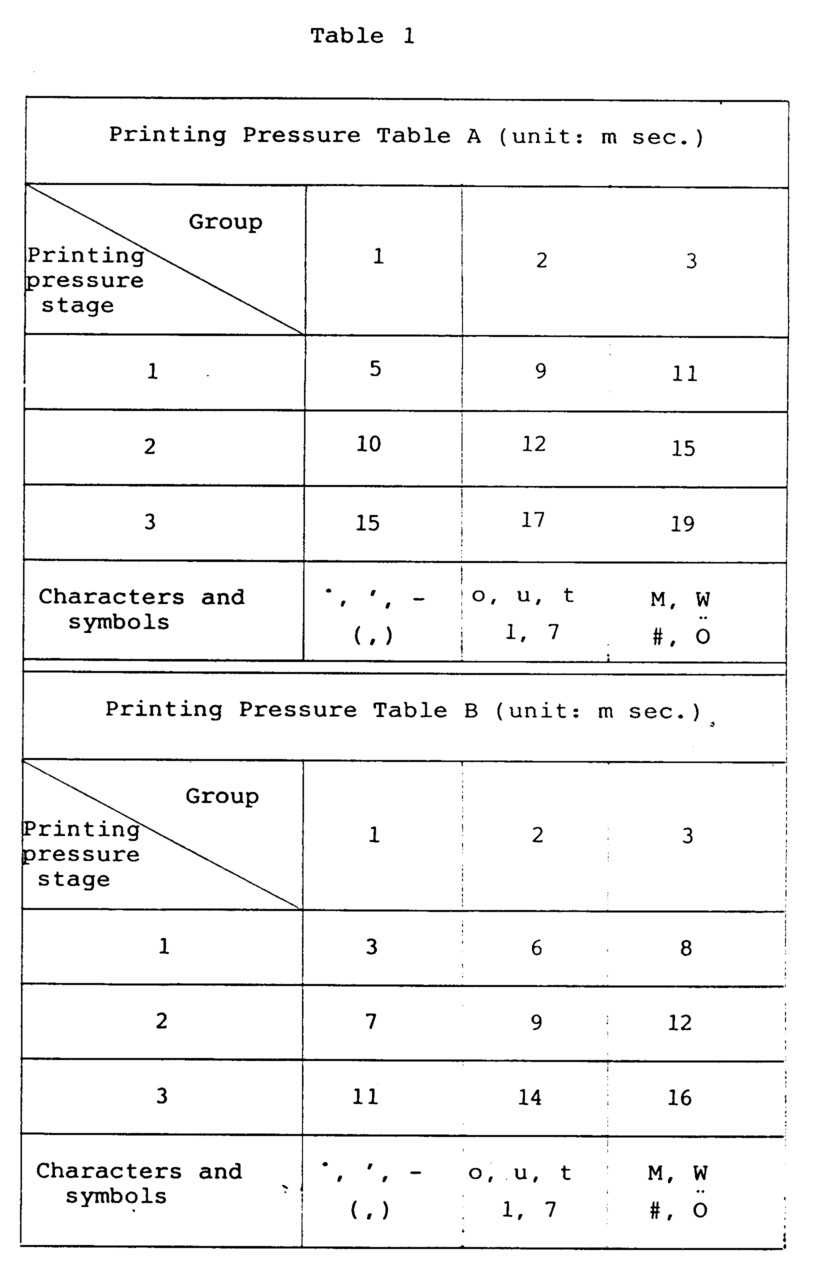

A timer 22 measures the time interval T_{BD} between B and D in Figure 2 and supplies the information to the CPU 23. A hammer driving circuit 26 is controlled by the CPU 23 in accordance with the recording data stored in RAM 24 and the printing table in ROM 25, and drives a printing hammer 27.

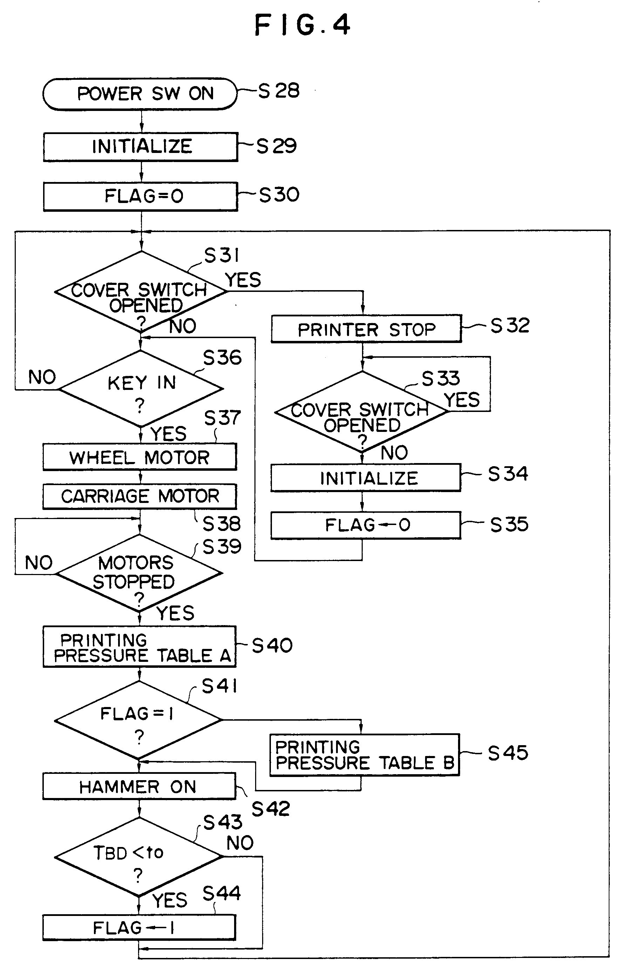

Figure 4 is a flow chart showing an example of the printer control based on the above-described construction. When a power switch is closed, initialization is effected and thereafter, a flag is set to 0 (steps S28-S30), and after the opening of a cover switch is detected (steps S31-S35), a standby condition for a key input is assumed (step S36). When the key input is effected thereafter, the wheel motor and the carriage motor are controlled (steps S37, S38 and S39), whereafter the printing pressure table A (see Table 1) is drawn out (Step S41). Subsequently, whether the flag is 0 or 1 is discriminated (step S41), and if the flag is 0, the printing hammer is driven in accordance with the printing pressure table A to effect printing (step S42). Also, if at step S41, the flag is 1, the printing pressure table B (see Table 1) is drawn out and the printing hammer is driven in accordance therewith (steps S45 and S46).

The return speed of the printing hammer is detected as T_{BD} by the timer, and where T_{BD} is shorter than a preset time t₀, the flag is set to 1, whereafter the printing hammer returns to the standby condition for a printing command. This state of the flag being 1 is kept until the cover switch is opened (steps S43 and S44).

Description will now be made with this applied to the actual operation of the printer. When the power switch is closed and an input for printing is effected to the printer which has become capable of printing, the printing hammer is driven in accordance with the printing pressure table A because the flag is set to 0 during the initialization. If at this time, the platen is hardened by a variation in temperature, a variation with time, etc. and therefore the return speed of the hammer shaft becomes high with a result that T_{BD} becomes smaller than t₀. The flag is set to 1. In this state, the printing hammer is driven in accordance with the printing pressure table B at the subsequent cycles, and this mode is not released until the cover switch is opened.

Generally, when the platen becomes hardened, the necessary printing energy becomes small and therefore, if as shown in Table 1, the printing pressure table B is set to a printing pressure lower than the printing pressure table A, the fact that the platen has become hardened is automatically detected and printing can be effected at a printing pressure corresponding thereto.

Although in the above-described embodiment, the case where there are two kinds of printing pressure tables has been taken as an example, printing can also be effected, of course, in accordance with this concept in a case where there are three or more kinds of printing pressure tables, and not the excitation time, but the driving current value can also be changed over. Further, in the present embodiment, the releasing of the mode is effected by the cover switch, but it is also possible to measure time by the timer and release the mode after a predetermined time has elapsed, or to count the frequency of driving of the printing hammer and release the mode when it is detected within a predetermined frequency that T_{BD} does not become t₀.

As described above, in the present invention, the printing pressure is changed in conformity with the return speed of the hammer detected by detecting means and therefore, printing can be accomplished with optimum printing energy conforming to the hardness of the platen.

Accordingly, even if the platen becomes hardened by a low temperature and the repulsion force of the platen is increased, the printing energy is made optimum and therefore, it does not happen that it becomes too late to effect the second power supply before the hammer strikes against the stopper.

## Claims

1. A recording apparatus for recording on a recording medium (4), said apparatus comprising:
a platen (1) supporting said recording medium (4);
an image holding member (2);
hammer means (9) for striking said image holding member (2) to record on said recording medium (4), said hammer means (9) being movable between an impacting position and a retracted position;
driving means (6, 15, 16) for imparting a driving force to said hammer means (9) to orient said hammer means (9) in a direction from said retracted position to said impacting position, said driving means (6, 15, 16) performing a first drive for recording and a second drive for recording;
speed detecting means (11, 12) for detecting the return speed of said hammer means (9) when said hammer means (9) returns from said impacting position to said retracted position by executing said first drive; and
controlling means (22 - 26) for controlling said driving means (6, 15, 16), wherein said controlling means (22 - 26) selects a drive force in conformity with the return speed detected by said speed detecting means (11, 12) to control said driving means (6, 15, 16) to perform said second drive.

2. A recording apparatus according to claim 1, wherein said speed detecting means (11, 12) has a plurality of slits (11a, 11b) operatively associated with movement of said hammer means (9), and a sensor (12) for reading the time interval between said slits (11a, 11b).

3. A recording apparatus according to claim 1, wherein said speed detecting means (11, 12) detects the return speed of said hammer means (9) varying in conformity with the change in hardness of said platen (1).

4. A recording apparatus according to claim 1, wherein said driving means (6, 15, 16) performs a third drive for reducing the return speed of said hammer means (9) between those of said first and second drives as said hammer means (9) returns from said impacting position to said retracted position.

5. A recording apparatus according to claim 1, wherein said controlling means (22 - 26) performs said second drive with a drive force which is smaller than that of said first drive when the return speed detected by said speed detecting means (11, 12) is higher than a predetermined speed.

6. A recording apparatus according to claim 1, wherein said hammer means (9) strikes said image holding member (2) with the recording medium (4) positioned between said platen (1) and an ink ribbon (17).

7. A recording apparatus according to claim 1, wherein said hammer means (9) has a yoke (6), a hammer member (9-a, 9-b), a coil unit (15) and a compression spring (16).

8. A recording apparatus according to claim 1, wherein said image holding member (2) has a character wheel (2) having a plurality of character members (2-a).

9. A recording apparatus according to claim 1, wherein said controlling means (22 - 26) has a CPU (23), and a RAM (24) and a ROM (25) which are connected to said CPU (23).

10. A recording apparatus according to claim 1, wherein said controlling means (22 - 26) changes the impact force by controlling a driving time of said hammer means (9).

11. A recording apparatus according to claim 1, wherein said controlling means (22 - 26) controls a driving time of said hammer means (9) by selecting from a time table to thereby change the impact force.

## Patentansprüche

1. Aufzeichnungsvorrichtung zum Aufzeichnen auf einem Aufzeichnungsmedium (4) mit:
einer Walze (1), die das Aufzeichnungsmedium (4) hält,
einem Bildhalteteil (2),
einer Hammervorrichtung (9) zum Anschlagen des Bildhalteteils (2) zum Aufzeichnen auf dem Aufzeichnungsmedium (4), wobei die Hammervorrichtung (9) zwischen einer Anschlagstellung und einer zurückgezogenen Stellung bewegbar ist,
einer Antriebsvorrichtung (6, 15, 16) zum Ausüben einer Antriebskraft auf die Hammervorrichtung (9) zum Ausrichten der Hammervorrichtung (9) in eine Richtung von der zurückgezogenen Stellung zu der Anschlagstellung, wobei die Antriebsvorrichtung (6, 15, 16) einen ersten Antrieb zum Aufzeichnen und einen zweiten Antrieb zum Aufzeichnen ausführt,
einer Geschwindigkeits-Erfassungsvorrichtung (11, 12) zum Erfassen der Rückkehrgeschwindigkeit der Hammervorrichtung (9), wenn die Hammervorrichtung (9) von der Anschlagstellung zu der zurückgezogenen Stellung zurückkehrt, durch Ausführen des ersten Antriebs, und
einer Steuervorrichtung (22 bis 26) zum Steuern der Antriebsvorrichtung (6, 15, 16), wobei die Steuervorrichtung (22 bis 26) eine Antriebskraft entsprechend der durch die Geschwindigkeits-Erfassungsvorrichtung (11, 12) erfaßten Rückkehrgeschwindigkeit auswählt, damit die Antriebsvorrichtung (6, 15, 16) zum Durchführen des zweiten Antriebs gesteuert wird.

2. Aufzeichnungsvorrichtung nach Anspruch 1, wobei die Geschwindigkeits-Erfassungsvorrichtung (11, 12) eine Vielzahl von Schlitzen (11a, 11b), die operativ zu der Bewegung der Hammervorrichtung (9) gehören, und einen Sensor (12) zum Lesen des Zeitintervalls zwischen den Schlitzen (11a, 11b) aufweist.

3. Aufzeichnungsvorrichtung nach Anspruch 1, wobei die Geschwindigkeits-Erfassungsvorrichtung (11, 12) die Rückkehrgeschwindigkeit der Hammervorrichtung (9) erfaßt, die sich entsprechend der Veränderung der Harte der Walze (1) verändert.

4. Aufzeichnungsvorrichtung nach Anspruch 1, wobei die Antriebsvorrichtung (6, 15, 16) einen dritten Antrieb zum Verringern der Rückkehrgeschwindigkeit der Hammervorrichtung (9) zwischen denen der ersten und zweiten Antriebe durchführt, wenn die Hammervorrichtung (9) von der Anschlagstellung in die zurückgezogene Stellung zurückkehrt.

5. Aufzeichnungsvorrichtung nach Anspruch 1, wobei die Steuervorrichtung (22 bis 26) den zweiten Antrieb mit einer Antriebskraft durchführt, die kleiner als die des ersten Antriebs ist, wenn die durch die Geschwindigkeits-Erfassungsvorrichtung (11, 12) erfaßte Rückkehrgeschwindigkeit höher als eine vorbestimmte Geschwindigkeit ist.

6. Aufzeichnungsvorrichtung nach Anspruch 1, wobei die Kammervorrichtung (9) an das Bildhalteteil (2) mit dem sich zwischen der Walze (1) und einem Farbband (17) befindenden Aufzeichnungsmedium (4) anschlägt.

7. Aufzeichnungsvorrichtung nach Anspruch 1, wobei die Hammervorrichtung (9) ein Joch (6), ein Hammerteil (9-a, 9-b), eine Spuleneinheit (15) und eine Druckfeder (16) aufweist.

8. Aufzeichnungsvorrichtung nach Anspruch 1, wobei das Bildhalteteil (2) ein Typenrad (2) mit einer Vielzahl von Typenteilen (2-a) aufweist.

9. Aufzeichnungsvorrichtung nach Anspruch 1, wobei die Steuervorrichtung (22 bis 26) eine Zentraleinheit (23) und einen Schreib-Lese-Speicher (24) sowie einen Festspeicher (25) aufweist, die an die Zentraleinheit (23) angeschlossen sind.

10. Aufzeichnungsvorrichtung nach Anspruch 1, wobei die Steuervorrichtung (22 bis 26) die Anschlagkraft durch Steuern einer Antriebszeit der Hammervorrichtung (9) verändert.

11. Aufzeichnungsvorrichtung nach Anspruch 1, wobei die Steuervorrichtung (22 bis 26) eine Antriebszeit der Hammervorrichtung (9) durch Auswahl aus einer Zeittabelle steuert, damit dadurch die Anschlagkraft verändert wird.

## Revendications

1. Appareil d'enregistrement destiné à enregistrer sur un support d'enregistrement (4), ledit appareil comportant :
un cylindre (1) supportant ledit support d'enregistrement (4) ;
un élément (2) porteur d'image ;
un moyen à marteau (9) destiné à frapper ledit élément (2) porteur d'image pour enregistrer sur ledit support d'enregistrement (4), lesdits moyens à marteau (9) étant mobiles entre une position de frappe et une position de retrait ;
des moyens d'entraînement (6, 15, 16) destinés à appliquer une force d'entraînement audit moyen à marteau (9) pour orienter ledit moyen à marteau (9) dans un sens allant de ladite position de retrait à ladite position de frappe, lesdits moyens d'entraînement (6, 15, 16) effectuant un premier entraînement pour un enregistrement et un second entraînement pour un enregistrement ;
des moyens (11, 12) de détection de vitesse destinés à détecter la vitesse de retour dudit moyen à marteau (9) lorsque ledit moyen à marteau (9) revient de ladite position de frappe à ladite position de retrait par l'exécution dudit premier entraînement ; et
des moyens de commande (22-26) destinés à commander lesdits moyens d'entraînement (6, 15, 16), lesdits moyens de commande (22-26) sélectionnant une force d'entraînement en conformité avec la vitesse de retour détectée par lesdits moyens (11, 12) de détection de vitesse pour commander lesdits moyens d'entraînement (6, 15, 16) afin d'effectuer ledit second entraînement.

2. Appareil d'enregistrement selon la revendication 1, dans lequel lesdits moyens (11, 12) de détection de vitesse comprennent plusieurs fentes (11a, 11b) associées fonctionnellement au mouvement dudit moyen à marteau (9) et un capteur (12) destiné à lire l'intervalle de temps entre lesdites fentes (11a, 11b).

3. Appareil d'enregistrement selon la revendication 1, dans lequel lesdits moyens (11, 12) de détection de vitesse détectent la vitesse de retour desdits moyens à marteau (9) qui varie en conformité avec la variation de dureté dudit cylindre (1).

4. Appareil d'enregistrement selon la revendication 1, dans lequel lesdits moyens d'entraînement (6, 15, 16) effectuent un troisième entraînement pour réduire la vitesse de retour dudit moyen à marteau (9) entre celles desdits premier et deuxième entraînements lorsque ledit moyen à marteau (9) provient de ladite position de frappe à ladite position de retrait.

5. Appareil d'enregistrement selon la revendication 1, dans lequel lesdits moyens de commande (22-26) effectuent ledit deuxième entraînement avec une force d'entraînement qui est inférieure à celle dudit premier entraînement lorsque la vitesse de retour détectée par lesdits moyens (11, 12) de détection de vitesse est supérieure à une vitesse prédéterminée.

6. Appareil d'enregistrement selon la revendication 1, dans lequel ledit moyen à marteau (9) frappe ledit élément (2) porteur d'image avec le support (4) d'enregistrement placé entre ledit cylindre (1) et un ruban encreur (17)

7. Appareil d'enregistrement selon la revendication 1, dans lequel ledit moyen à marteau (9) comporte une culasse (6), un élément à marteau (9-a, 9-b), une unité à bobine (15) et un ressort (16) de compression.

8. Appareil d'enregistrement selon la revendication 1, dans lequel ledit élément (2) porteur d'image comporte une roue (2) à caractères ayant plusieurs éléments à caractères (2-a).

9. Appareil d'enregistrement selon la revendication 1, dans lequel ledit moyen de commande (22-26) comporte une unité centrale de traitement (23), et une mémoire vive (24) et une mémoire morte (25) qui sont connectées à ladite unité centrale de traitement (23).

10. Appareil d'enregistrement selon la revendication 1, dans lequel lesdits moyens de commande (22-26) font varier la force d'impact en commandant un temps d'entraînement dudit moyen à marteau (9).

11. Appareil d'enregistrement selon la revendication 1, dans lequel lesdits moyens de commande (22-26) commandent un temps d'entraînement dudit moyen à marteau (9) par une sélection dans une table de temps pour modifier ainsi la force de frappe.
